# EUROPEAN PATENT APPLICATION

(11) **EP 2 373 092 A2**
(43) Date of publication of application: **05.10.2011**
(21) Application number: 11250391.7
(22) Date of filing: 28.03.2011
(51) Int. Cl.: H04W 48/14

(54) **A wireless LAN terminal, a wireless LAN access point and a wireless LAN system**

(30) Priority: 30.03.2010 JP 2010079011
(71) Applicant: NEC Access Technica, Ltd., Shizuoka 436-8501 (JP)
(72) Inventor: Misumi, Jun, Shizuoka (JP)
(74) Representative: Robson, Aidan John

(57) **Abstract**

A wireless LAN terminal according to the present invention comprises a communication unit which performs wireless communication with a wireless LAN access point, a wireless parameter request unit which transmits a probe request for requesting wireless parameters used for the wireless communication to the wireless LAN access point via the communication unit and a wireless parameter setup unit which receives a probe response from the wireless LAN access point as a response to the probe request of the wireless parameter request unit via the communication unit and sets up the wireless parameters included in the probe response.

## Description

This application is based upon and claims the benefit of priority from Japanese Patent Application No. 2010-079011, filed on March 30, 2010, the disclosure of which is incorporated herein in its entirety by reference.

### TECHNICAL FIELD

The present invention relates to a wireless LAN terminal or the like which can communicate by radio without using any telecommunication cables.

### BACKGROUND ART

Communication networks are often configured using telecommunication cables because of its communication reliability and communication speed. However, it is a troublesome task for changing configuration of a wired network because cable laying needs to be renewed whenever the network configuration is changed. On the other hand, when a network is established by wireless, it can easily change configuration of the network because cable laying renewal is not required for changing the network configuration. Also, with respect to communication speed, the communication speed equal to a wired network can be achieved in a wireless network by formulating the high-speed wireless communication standard such as IEEE (The Institute of Electrical and Electronics Engineers) 802.11n. However, the wireless communication uses radio waves as a communication medium, and radio waves tend to leak to outside of an expected usage area, therefore a wireless network has a higher risk of illegal access and information leakage than a wired network. In order to prevent such situation, encryption of communication is indispensable in wireless communication.

In the present wireless encryption method, it is necessary to perform encryption setup at both of a wireless LAN (Local Area Network) access point side and a wireless LAN terminal side. First, by performing encryption setup to the wireless LAN access point side and also inputting the same setup information as the wireless LAN access point side to the wireless LAN terminal side, the wireless encryption communication between the wireless LAN access point and the wireless LAN terminal becomes possible. However, changing the encryption setup at the wireless LAN access point side has been a troublesome task because it requires the encryption setup at the wireless LAN terminal side to be manually changed once again.

A system which can follow wireless parameter change in a wireless LAN terminal side in response to the wireless parameter change in a wireless LAN access point side is disclosed in the patent document 1. In the system on this patent document 1, first, a field for notifying of a key number is provided in a beacon frame, and an IC (Integrated Circuit) card which stores a plurality of sets of key number and key (key information) is installed in the wireless LAN access point and the wireless LAN terminals respectively in advance. And the wireless LAN access point changes the key periodically and delivers the changed key number to the wireless LAN terminals by the beacon frame. Each wireless LAN terminal specifies key information from the key number in the beacon frame and uses that for encryption and decryption.
Patent document 1: Japanese Laid-Open Patent Publication No. 2003-258790
Patent document 2: Japanese Laid-Open Patent Publication No. 2009-141671

However, technology on this patent document 1 includes the following problem.

The first problem is that the encryption key cannot be changed to an arbitrary encryption key. The reason is because the key information is stored in the IC card in advance, and it is necessary to install in the wireless LAN access point and the wireless LAN terminal respectively. That is, because any encryption keys other than the key information stored in the IC card cannot be used.

The second problem is that the wireless parameters other than the encryption key, such as SSID (Service Set Identifier) or the like, for example, cannot be changed. The reason is because the wireless LAN terminal side can only follow the wireless parameter change to the predetermined encryption key information. That is, it is because the wireless parameters other than the encryption key are not stored in the IC card. Further, the SSID is a network identifier which is used in the wireless LAN system, and the identical SSID should be set up in both of the wireless LAN terminal and the wireless LAN access point for communicating with each other.

On the other hand, in the existing wireless LAN system, their exists WPS (WiFi Protected Setup) or the like as a method for connecting a wireless LAN terminal to an operating wireless LAN access point easily by user operation. However, the wireless parameter change in the wireless LAN access point after connecting with the wireless LAN terminal is not considered, therefore, connection of the wireless LAN terminal is released from the wireless LAN access point when the wireless parameter is changed in the wireless LAN access point. It is necessary for the wireless LAN terminal from which the connection has been released to perform connection setup to the wireless LAN access point from the beginning once again.

When a plurality of wireless LAN terminals are connected with one wireless LAN access point, the connection setup for all wireless LAN terminals should be performed once again, and it causes a problem that it needs great amount of time and effort and also communication could fail due to any mistakes in the connection setup or update operation.

According to technology in the patent document 2, transmission output, a channel frequency and capability of outdoor use or the like are judged from a database based on information such as the regulation regarding radio utilization in a country where the wireless LAN access point is used. Accordingly, it is not a technology which is related to notify a wireless LAN terminal of required wireless parameters for the connection with a wireless LAN access point such as an encryption key and SSID which are different for each of apparatuses.

### SUMMARY

An exemplary object of the invention is to provide a wireless LAN terminal or the like which can easily follow wireless parameter change at the wireless LAN terminal side when wireless parameters are changed in a wireless LAN access point side.

A wireless LAN terminal according to an exemplary aspect of the invention includes a communication unit which performs wireless communication with a wireless LAN access point, a wireless parameter request unit which transmits a probe request for requesting wireless parameters used for the wireless communication to the wireless LAN access point via the communication unit and a wireless parameter setup unit which receives a probe response from the wireless LAN access point as a response to the probe request of the wireless parameter request unit via the communication unit and sets up the wireless parameters included in the probe response.

A wireless LAN access point according to an exemplary aspect of the invention includes a communication unit which performs wireless communication with a wireless LAN terminal, a wireless parameter change unit which changes the wireless parameters used for the wireless communication and a wireless parameter response unit which transmits a probe response including the wireless parameters to the wireless LAN terminal via the communication unit when a probe request which requests the wireless parameters is received from the wireless LAN terminal via the communication unit.

A method for controlling a wireless LAN terminal equipped with a communication unit for performing wireless communication with a wireless LAN access point, according to an exemplary aspect of the invention includes the steps of transmitting a probe request which requests wireless parameters used for the wireless communication to the wireless LAN access point via the communication unit, receiving a probe response from the wireless LAN access point as a response to the probe request via the communication unit and setting up the wireless parameters included in the probe response.

### BRIEF DESCRIPTION OF THE DRAWINGS

Exemplary features and advantages of the present invention will become apparent from the following detailed description when taken with the accompanying drawings in which:
Fig. 1 is a block diagram showing the composition of the first exemplary embodiment;
Fig. 2 is a sequence diagram 1 showing operation of the first exemplary embodiment;
Fig. 3 is a sequence diagram 2 showing operation of the first exemplary embodiment;
Fig. 4 is a flow chart 1 showing operation of the first exemplary embodiment;
Fig. 5 is a flow chart 2 showing operation of the first exemplary embodiment;
Fig. 6 is a flow chart 3 showing operation of the first exemplary embodiment;
Fig. 7 is a block diagram showing the composition of the second exemplary embodiment;
Fig. 8 is a sequence diagram showing operation of the second exemplary embodiment;
Fig. 9 is a flow chart showing operation of the second exemplary embodiment;
Fig. 10 is a block diagram 1 showing the composition of the third exemplary embodiment;
Fig. 11 is a block diagram 2 showing the composition of the third exemplary embodiment;
Fig. 12 is a sequence diagram 1 showing operation of the third exemplary embodiment;
Fig. 13 is a sequence diagram 2 showing operation of the third exemplary embodiment;
Fig. 14 is a sequence diagram 3 showing operation of the third exemplary embodiment;
Fig. 15 is a flow chart 1 showing operation of the third exemplary embodiment;
Fig. 16 is a flow chart 2 showing operation of the third exemplary embodiment;
Fig. 17 is a flow chart 3 showing operation of the third exemplary embodiment; and
Fig. 18 is a block diagram showing the composition of the fourth exemplary embodiment.

### EXEMPLARY EMBODIMENTS

### (First exemplary embodiment)

Next, a detailed explanation will be given for a first exemplary embodiment with reference to the drawings.

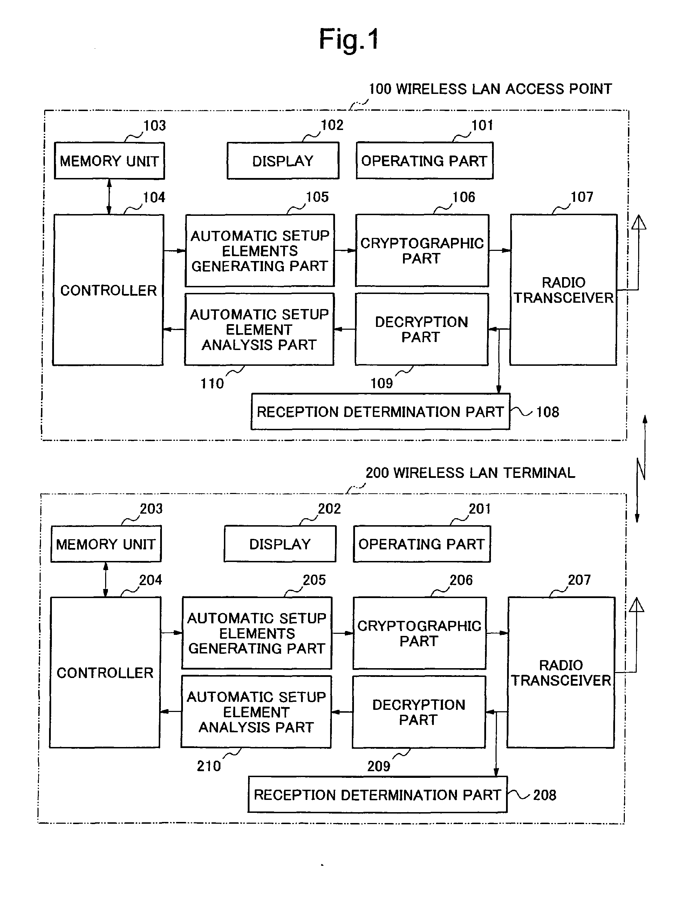

Fig. 1 is a block diagram showing the composition of the first exemplary embodiment. A wireless LAN terminal 200 of the first exemplary embodiment has a radio transceiver (207) which performs wireless communication with a wireless LAN access point 100. The wireless LAN terminal 200 also has a wireless parameter request means (203,204,205,206) which transmits a probe request for requesting wireless parameters which are used for the wireless communication, to the wireless LAN access point 100 via the radio transceiver (207). Moreover, the wireless LAN terminal 200 receives a probe response, which is a response to the probe request of the wireless parameter request means (203, 204, 205, 206), from the wireless LAN access point 100 via the radio transceiver (207). Moreover, the wireless LAN terminal 200 has a wireless parameter setup means (203, 204, 208, 209, 210) to set up the wireless parameters included in the probe response.

According to the first exemplary embodiment, a communication means of the wireless LAN terminal 200 includes the radio transceiver 207. The wireless parameter request means includes a part of a memory unit 203, a part of a controller 204, an automatic setup element generating part 205 and a cryptographic part 206. The wireless parameter setup means includes a part of the memory unit 203, a part of the controller 204, a reception determination part 208, a decryption part 209 and an automatic setup element analysis part 210. The probe request and the probe response use those signals which are defined by the standard such as IEEE 802.11, for example.

The wireless LAN access point 100 of the first exemplary embodiment includes a radio transceiver (107) which performs the wireless communication with the wireless LAN terminal 200 and a wireless parameter change means (103, 104) which changes the wireless parameters used for the wireless communication. Moreover, the wireless LAN access point 100 receives the probe request which requests the wireless parameters from the wireless LAN terminal 200 via the radio transceiver (107). The wireless LAN access point 100 has a wireless parameter response means (103, 104, 105, 106, 108, 109, 110) which transmits the probe response including the wireless parameters to the wireless LAN terminal 200 via the radio transceiver (107) in that case.

According to the first exemplary embodiment, a communication means of the wireless LAN access point 100 includes the radio transceiver 107. The wireless parameter change means includes a part of a memory unit 103 and a part of a controller 104. The wireless parameter response means includes a part of the memory unit 103, a part of the controller 104, an automatic setup element generating part 105, a cryptographic part 106, the radio transceiver 107, a reception determination part 108, a decryption part 109 and an automatic setup element analysis part 110.

A wireless LAN system of the first exemplary embodiment includes the wireless LAN terminal 200 and the wireless LAN access point 100.

A control method of the wireless LAN terminal of the first exemplary embodiment is realized as operation of the wireless LAN terminal 200, and it transmits a probe request for requesting wireless parameters used for wireless communication to the wireless LAN access point 100 via the radio transceiver (207). Moreover, the wireless LAN terminal receives a probe response, which is a response to the probe request, from the wireless LAN access point 100 via the radio transceiver (207) and sets up the wireless parameters included in the probe response.

A control method of the wireless LAN access point of the first exemplary embodiment is realized as operation of the wireless LAN access point 100, and it changes wireless parameters used for wireless communication, and receives a probe request which requests the wireless parameters from the wireless LAN terminal 200 via the radio transceiver (107). The wireless LAN access point transmits a probe response including the wireless parameters to the wireless LAN terminal 200 via the radio transceiver (107) in that case.

A control program of the wireless LAN terminal of the first exemplary embodiment causes a computer to execute a processing of transmitting a probe request which requests wireless parameters used for wireless communication to the wireless LAN access point 100 via the radio transceiver (207). Moreover, the control program of the wireless LAN terminal causes a computer to execute a processing of receiving a probe response from the wireless LAN access point 100 as a response to the probe request via the radio transceiver (207) and sets up the wireless parameters included in the probe response.

For example, each function of the controller 204, the automatic setup element generating part 205, the cryptographic part 206, the reception determination part 208, the decryption part 209 and the automatic setup element analysis part 210 is realized by a computer. This computer may be a general computer having CPU (Central Processing Unit), a memory (ROM (Read Only Memory) and RAM (Random Access Memory)) and an input and output interface or the like. At this time, the CPU reads, interprets and executes a control program of the first exemplary embodiment stored in the memory.

A control program of the wireless LAN access point of the first exemplary embodiment causes a computer to execute a processing of changing wireless parameters used for wireless communication. The control program of the wireless LAN access point further causes a computer to execute a processing of transmitting a probe response including the wireless parameters to the wireless LAN terminal 200 via the radio transceiver (107) when the probe request for requesting the wireless parameters is received from the wireless LAN terminal 200 via the radio transceiver (107).

For example, each function of the controller 104, the automatic setup element generating part 105, the cryptographic part 106, the reception determination part 108, the decryption part 109 and the automatic setup element analysis part 110 is realized by a computer. This computer may be a general computer having CPU, a memory (ROM and RAM) and an input and output interface or the like. At this time, the CPU reads, interprets and executes a control program of the first exemplary embodiment stored in the memory.

Operation of the first exemplary embodiment will be described more in detail below.

In Fig. 1, after detecting wireless connection release, the wireless LAN terminal 200 transmits data generated by the automatic setup element generating part 205 for requesting wireless parameters as a probe request. After receiving the probe request and detecting the data which requests the wireless parameters, the wireless LAN access point 100 extracts encryption information, which is supported by the wireless LAN terminal 200, by the automatic setup element analysis part 110. Next, the wireless LAN access point 100 generates the most suitable wireless parameters in the automatic setup element generating part 105 based on the changed wireless parameters which have been changed by its own and the extracted encryption information, and transmits the generated wireless parameters as a probe response. By setting up the received wireless parameters, the wireless LAN terminal 200 which has received the probe response can be connected to the wireless LAN access point 100 in which the wireless parameters have been changed.

As shown in Fig. 1, the first exemplary embodiment includes the wireless LAN access point 100 and the wireless LAN terminal 200.

The wireless LAN access point 100 includes an operating part 101 which accepts operation from a keyboard or the like, a display 102 which performs display indication of the wireless parameters being set or the like, the memory unit 103 storing the wireless parameters or the like and the controller 104 which performs communication control by the program control. The wireless LAN access point 100 further includes the automatic setup element generating part 105 which generates data including the wireless parameters as automatic setup elements to be contained in a probe response frame transmitted to the wireless LAN terminal 200 by instructions of the controller 104 and the cryptographic part 106 which encrypts the generated automatic setup elements. The wireless LAN access point 100 further includes the radio transceiver 107 for transmitting signals to the wireless LAN terminal 200 and the reception determination part 108 that judges the reception propriety of a probe request frame received from the wireless LAN terminal 200. The wireless LAN access point 100 further includes the decryption part 109 which decrypts the automatic setup elements contained in the probe request frame received from the wireless LAN terminal 200 and the automatic setup element analysis part 110 which analyzes the decrypted automatic setup elements.

The memory unit 103 stores the wireless parameters, a secret key, a MAC address of the wireless LAN access point 100 and a MAC address of the wireless LAN terminal to which wireless parameter notification is permitted. That is, a MAC address of the wireless LAN terminal which is allowed to transmit the wireless parameter notification to the wireless LAN access point 100 is stored in the memory unit 103. The wireless parameters include information such as SSID as a network identifier, an encryption method and an encryption key or the like. The secret key includes key information common to a secret key stored in the memory unit 203 of the wireless LAN terminal 200. The automatic setup elements which are used for exchanging the wireless parameters are encrypted by the MAC address of the wireless LAN access point 100, the MAC address of the wireless LAN terminal to which the wireless parameter notification is permitted and the common secret key. As a result, the security can be raised. The MAC address of the wireless LAN terminal to which the wireless parameter notification is permitted is a MAC address of the wireless LAN terminal which has been memorized when the first wireless connection was established.

The controller 104 notifies the automatic setup element generating part 105 of instructions to generate the automatic setup elements based on the wireless parameters stored in the memory unit 103 and supported encryption information of the wireless LAN terminal 200 obtained from the automatic setup element analysis part 110. It includes appropriate wireless parameters to be notified to the wireless LAN terminal 200 in these instructions. Further, when the wireless parameters stored in the memory unit 103 are not included in the supported encryption information of the wireless LAN terminal 200, it does not generate the automatic setup elements.

The automatic setup element generating part 105 generates the automatic setup elements based on information including the wireless parameters notified from the controller 104.

The cryptographic part 106 encrypts the automatic setup elements generated by the automatic setup element generating part 105 with including the MAC address of the wireless LAN access point 100, the MAC address of the wireless LAN terminal 200 and information on the secret key.

The radio transceiver 107 transmits a probe response frame to the wireless LAN terminal 200 and receives a probe request frame from the wireless LAN terminal 200. The probe request frame is received without being discarded when broadcast designation is set to SSID of the probe request frame and even when the wireless LAN access point 100 conceals SSID and SSID is not transmitted by a beacon frame. This is because there is a possibility of a probe response frame being transmitted in a certain situation of determination result in the reception determination part 108. In general, the probe response frame is not transmitted as a response to the probe request frame if SSID in the probe request frame is not identical to SSID in the wireless LAN access point 100 in the case where the wireless LAN access point 100 is concealing SSID.

The reception determination part 108 operates as follows. First, the reception determination part 108 examines whether the encrypted automatic setup element information for requesting the wireless parameter notification is included in the probe request frame from the wireless LAN terminal 200 received by the radio transceiver 107. If it is included, the reception determination part 108 examines whether a MAC address of the wireless LAN terminal 200 exists in a list of MAC addresses of the wireless LAN terminal to which the wireless parameter notification is permitted stored in the memory unit 103. If it exists, the encrypted automatic setup element information for requesting the wireless parameter notification in the probe request frame is notified to the decryption part 109.

The decryption part 109 decrypts the automatic setup element information with including a transmission source MAC address of the probe request frame received from the wireless LAN terminal 200, the MAC address of the wireless LAN access point 100 stored in the memory unit 103 and information on a secret key.

The automatic setup element analysis part 110 extracts the supported encryption information of the wireless LAN terminal 200 from the automatic setup element information for requesting the wireless parameter notification in the probe request frame which was decrypted in the decryption part 109.

The wireless LAN terminal 200 includes the operating part 201 which accepts operation from a keyboard or the like, the display 202 which performs display indication of the wireless parameters being set or the like, the memory unit 203 storing the wireless parameters or the like and the controller 204 which performs communication control by the program control. The wireless LAN terminal 200 further includes the automatic setup element generating part 205 which generates data including the supported encryption information to be contained in the probe request frame, which is transmitted to the wireless LAN access point 100, by instructions of the controller 204, and the cryptographic part 206 which encrypts the generated automatic setup elements. The wireless LAN terminal 200 further includes the radio transceiver 207 for transmitting signals to the wireless LAN access point 100, and the reception determination part 208 that judges reception propriety of a probe response frame received from the wireless LAN access point 100. The wireless LAN terminal 200 further includes the decryption part 209 which decrypts the automatic setup elements contained in the probe response frame received from the wireless LAN access point 100, and the automatic setup element analysis part 210 which analyzes the decrypted automatic setup elements.

The memory unit 203 stores the supported encryption information, the wireless parameters, the secret key, the MAC address of the wireless LAN terminal 200 and the MAC address of the wireless LAN access point to which the wireless parameter notification is requested. The supported encryption information is an encryption method which the wireless LAN terminal 200 is supporting. The wireless parameters include information such as SSID as a network identifier, an encryption method and an encryption key or the like. The secret key includes key information common to a secret key stored in the memory unit 103 of the wireless LAN access point 100. The security can be raised by encrypting the automatic setup elements which are used for exchanging the wireless parameters by the MAC address of the wireless LAN terminal 200, the MAC address of the wireless LAN access point to which the wireless parameter notification is requested and the common secret key. The MAC address of the wireless LAN access point to which the wireless parameter notification is requested is a MAC address of the wireless LAN access point which has been memorized when the first wireless connection was established.

The controller 204 monitors a connection status of the wireless LAN and instructs the memory unit 203 to store the changed wireless parameters received from the wireless LAN access point. Also, the controller 204 monitors the connection status of the wireless LAN, and when it has detected connection release from belonging with the wireless LAN access point, it notifies the automatic setup element generating part 205 of the automatic setup elements generation instructions. The automatic setup elements generation instructions include the supported encryption information stored in the memory unit 203 in order to request the changed wireless parameters. The connection release from belonging with the wireless LAN access point occurs, for example, after the encryption method or SSID has been changed in the wireless LAN access point side. Also, in order to reflect the changed wireless parameters received from the wireless LAN access point in the wireless LAN terminal 200, the controller 204 stores the received wireless parameters, which have been changed, to the memory unit 203 and enables the stored wireless parameters to be used as the wireless parameters for wireless connections after that.

The automatic setup element generating part 205 generates the automatic setup elements based on information including the supported encryption information notified from the controller 204.

A cryptographic part 206 encrypts the automatic setup elements, which the automatic setup element generating part 205 has generated, together with the MAC address of the wireless LAN terminal 200, the MAC address of the wireless LAN access point to which the wireless parameter notification is requested and information on the secret key.

The radio transceiver 207 transmits the probe request frame and receives the probe response frame. It is supposed that the probe request frame contains the automatic setup elements which have been encrypted in the cryptographic part 206 and broadcast designation is set to SSID. By setting up the broadcast designation to SSID, communication with the wireless LAN access point is made possible even when SSID in the wireless LAN access point side has been changed.

The decryption part 209 decrypts a transmission source MAC address of the probe response frame received from the wireless LAN access point 100, the MAC address of the wireless LAN terminal stored in the memory unit 203 and information on the secret key.

The automatic setup element analysis part 210 extracts wireless parameter information on the wireless LAN access point 100 from the automatic setup element information which includes the wireless parameters contained in the probe response frame decrypted in the decryption part 209.

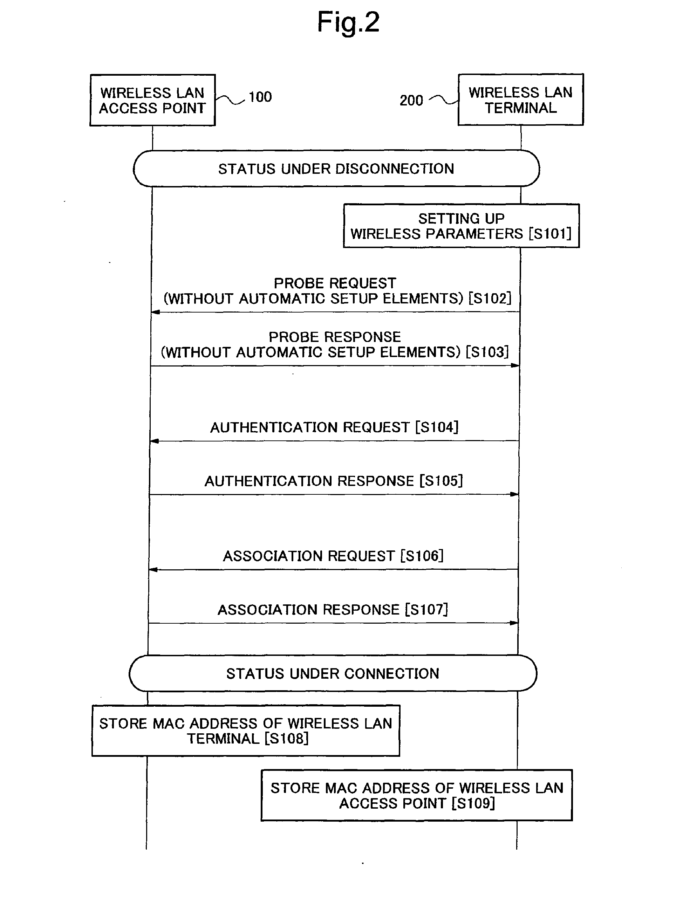

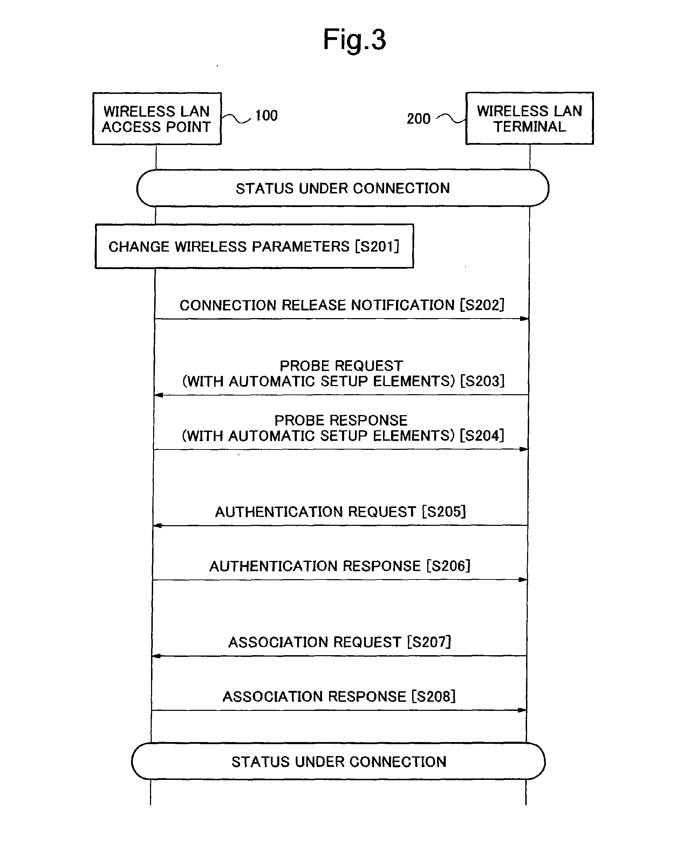

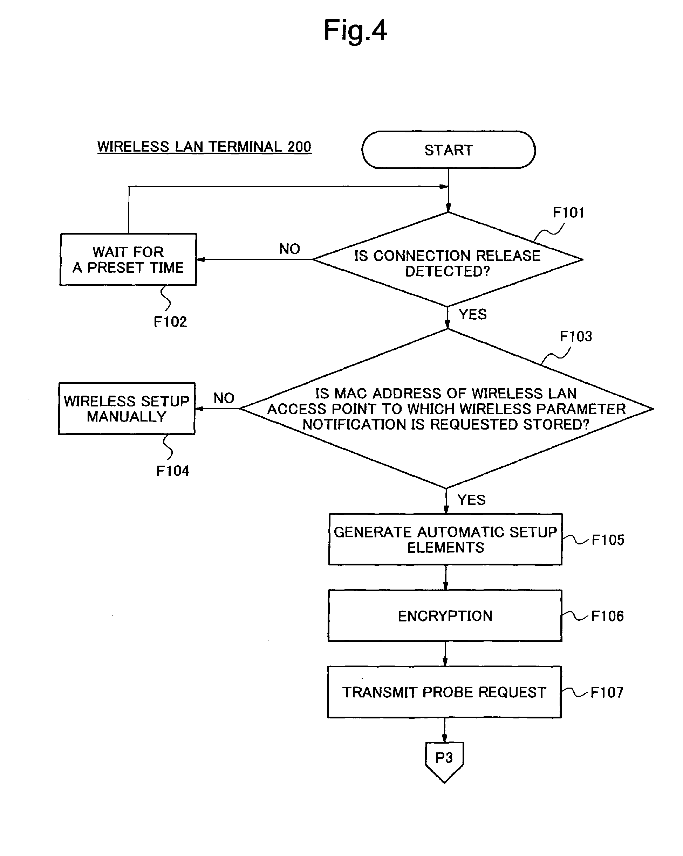

Next, operation of the first exemplary embodiment will be described in detail with reference to sequence diagrams of Fig. 2 and Fig. 3, and flow charts of Fig. 4, Fig. 5 and Fig. 6.

As shown in Fig. 2, in a status where the wireless setup of the wireless LAN terminal 200 is not performed, similarly to conventional way, the wireless parameters are to be set up to the wireless LAN terminal 200 side manually or by using the simple automatic wireless setup or the like (S101). Next, the wireless LAN terminal 200 is connected to the wireless LAN access point 100 through the procedures of a probe request, a probe response (without automatic setup elements) (S102, S103), an authentication request, an authentication response (S104, S105), an association request and an association response (S106, S107).

After that, the wireless LAN access point 100 stores the MAC address of the wireless LAN terminal 200 as a wireless LAN terminal to which the wireless parameter notification is permitted in the memory unit 103 (S108). Similarly, the wireless LAN terminal 200 stores the MAC address of the wireless LAN access point 100 as a wireless LAN access point to which the wireless parameter notification is requested in the memory unit 203 (S109).

As shown in Fig. 3, when the wireless parameters are changed (S201) from the operating part 101 of the wireless LAN access point 100 in a status where the wireless LAN access point 100 is being connected to the wireless LAN terminal 200, the connection release notification is transmitted (S202) to all wireless LAN terminals 200. At the same time, the connection status with the wireless LAN terminal 200 is released.

As shown in Fig. 4, the wireless LAN terminal 200 prepares to transmit a probe request in order to perform reconnection after detecting the connection release status by monitoring of the wireless LAN connection status by the controller 204 (F101). First, it is checked whether a MAC address of the wireless LAN access point 100 to which the wireless parameter notification is requested exists in the memory unit 203 (F103). If an appropriate MAC address does not exist, the wireless setup is performed manually or by the conventional method (F104), or the like. When an appropriate MAC address exists, in order to obtain the changed wireless parameters, the controller 204 notifies the automatic setup element generating part 205 of instructions including the supported encryption information stored in the memory unit 203 to generate the automatic setup elements. The automatic setup element generating part 205 generates the automatic setup elements based on the information including the supported encryption information notified from the controller 204 (F105).

Next, the cryptographic part 206 encrypts the automatic setup elements generated by the automatic setup element generating part 205 (F106). The automatic setup elements include the MAC address of the wireless LAN terminal 200 stored in the memory unit 203, the MAC address of the wireless LAN access point 100 to which the wireless parameter notification is requested and information on the secret key. Next, the radio transceiver 207 transmits a probe request which contains the automatic setup elements encrypted in the cryptographic part 206 and broadcast designation is being set to SSID. By setting the broadcast designation to SSID, the probe request with SSID of broadcast designation can be received at the wireless LAN access point 100 side even when SSID in the wireless LAN access point 100 side has been changed.

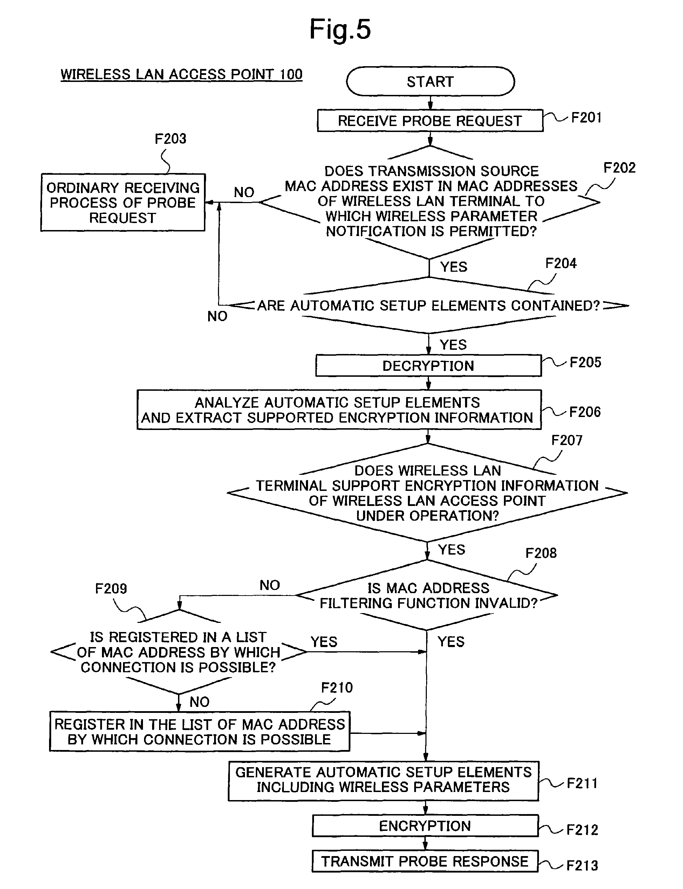

As shown in Fig. 5, the transmitted probe request is received by the radio transceiver 107 of the wireless LAN access point 100 (F201). The reception determination part 108 examines whether a transmission source of the received probe request, that is, a MAC address of the wireless LAN terminal 200 exists in a list of MAC addresses of the wireless LAN terminals to which the wireless parameter notification is permitted stored in the memory unit 103 (F202). By performing this judgment, it becomes possible to discard the wireless parameter notification request from the wireless LAN terminal which is not permitted.

When the MAC address of the wireless LAN terminal 200 exists in the memory unit 103, it examines whether encrypted automatic setup element information for requesting the wireless parameter notification is contained in the probe request (F204). When the encrypted automatic setup element information is contained, the encrypted automatic setup element information for requesting the wireless parameter notification in the probe request frame is notified to the decryption part 109, and decryption is performed (F205). The automatic setup element information includes the transmission source MAC address of the probe request frame received from the wireless LAN terminal 200, the MAC address of the wireless LAN access point 100 stored in the memory unit 103 and information on the secret key. Even when a wireless LAN terminal having a malicious intention transmits a probe request using a MAC address of a wireless LAN terminal being connected disguisedly, it can prevent wireless parameter transmission to such an unauthorized terminal because the automatic setup elements cannot be decrypted correctly by employing a secret key as the part of the encryption key.

Further, in the conventional system, the wireless LAN access point 100 does not send back a probe response when the broadcast designation is set to SSID of the probe request and the wireless LAN access point 100 conceals SSID and SSID is not transmitted by a beacon frame or the like. However, according to this first exemplary embodiment, decryption is performed in the decryption part 109 (F205) when in the steps F202 and F204 the probe request is judged to contain the encrypted automatic setup element information for requesting the wireless parameter notification from the wireless LAN terminal to which the wireless parameter notification is permitted. It is because the wireless LAN access point 100 sends back a probe response in this case. The automatic setup element analysis part 110 extracts the supported encryption information of the wireless LAN terminal 200 from the automatic setup element information for requesting the wireless parameter notification in the probe request frame which was decrypted in the decryption part 109 (F206).

Next, the controller 104 examines whether encryption information in the wireless parameters stored in the memory unit 103 is included in the supported encryption information of the wireless LAN terminal 200 which is obtained as a result of analysis performed by the automatic setup element analysis part 110 (F207). When included, i.e., when it is judged that the wireless LAN terminal 200 can be connected by the value of the changed wireless parameters for the wireless LAN access point 100, the controller 104 notifies the automatic setup element generating part 105 of generation instructions of the automatic setup elements. The automatic setup elements include appropriate wireless parameters to be notified to the wireless LAN terminal 200. When the wireless parameters stored in the memory unit 103 are not included in the supported encryption information of the wireless LAN terminal 200, the controller 104 does not instruct generation of the automatic setup elements.

When the MAC address filtering function is changed from invalid to effective as the wireless parameter change in the wireless LAN access point 100, the following problem can happen if a MAC address of the wireless LAN terminal 200 is not registered in a list. In other words, there is a possibility that the wireless LAN terminal 200 cannot be connected after the wireless parameter notification from the wireless LAN access point 100. Therefore, it is examined whether the MAC address filtering function is effective or invalid (F208). When it is effective, it is examined whether the MAC address of the wireless LAN terminal 200 is registered in the list of MAC addresses by which connection is possible (F209). If not registered, the MAC address of the wireless LAN terminal 200 is registered in the list of MAC addresses by which connection is possible (F210).

Next, by instructions of the controller 104, the automatic setup element generating part 105 generates the automatic setup elements based on information including the wireless parameters which have been notified (F211). The cryptographic part 106 encrypts the automatic setup elements generated by the automatic setup element generating part 105 together with the MAC address of the wireless LAN access point 100, the MAC address of the wireless LAN terminal 200 and information on the secret key (F212). The radio transceiver 107 transmits the encrypted automatic setup elements including the wireless parameters changed in the wireless LAN access point 100 as the probe response to the wireless LAN terminal 200 (F213).

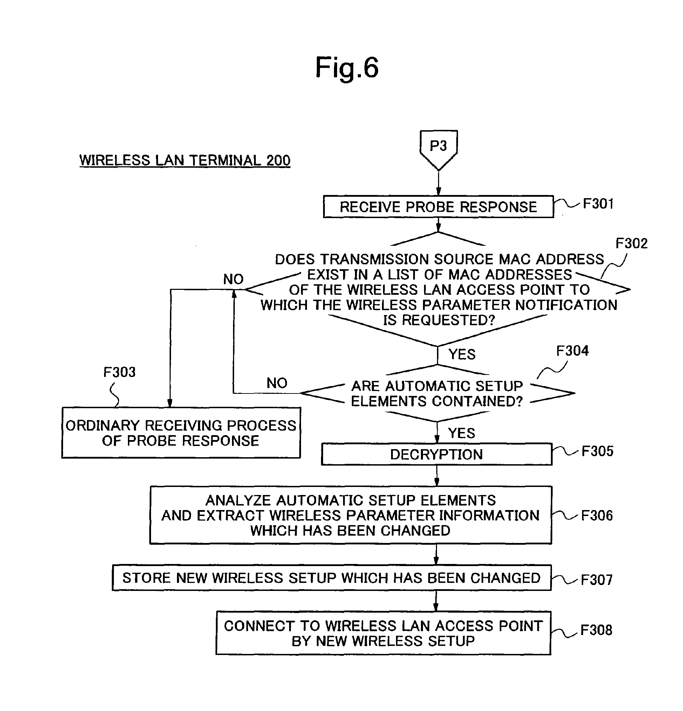

As shown in Fig. 6, the transmitted probe response is received by the radio transceiver 207 of the wireless LAN terminal 200 (F301). The reception determination part 208 examines whether a transmission source of the received probe response, that is, a MAC address of the wireless LAN access point 100 exists in a list of MAC addresses of the wireless LAN access point to which the wireless parameter notification is requested stored in the memory unit 203 (F302). When existing, the reception determination part 208 examines whether encrypted automatic setup element information which is a response to the wireless parameter notification request is contained in the probe response (F304).

When it is contained, the reception determination part 208 notifies the decryption part 209 of the encrypted automatic setup element information. A decryption part 209 decrypts the received information together with the transmission source MAC address of the probe response frame received from the wireless LAN access point 100, the MAC address of the wireless LAN terminal 200 stored in the memory unit 203 and information on the secret key (F305).

The automatic setup element analysis part 210 extracts the wireless parameters from the automatic setup element information which is contained in the probe response frame, a response to the wireless parameter notification request, and is decrypted in the decryption part 209 (F306). The wireless parameters include information such as SSID as a network identifier of the wireless LAN access point 100, the encryption method and the encryption key. Based on the extracted wireless parameters, the controller 204 stores new wireless setup after changed to the memory unit 203 (F307) and connects to the wireless LAN access point 100 (F308).

The effects of this first exemplary embodiment are as follows.

The first effect is that it is possible to continue communication without performing a setup work in the wireless LAN terminal 200 side after the wireless parameters are changed in the wireless LAN access point 100 side. As a result, it becomes possible to eliminate a setup mistake or slip in an update work of the wireless LAN terminal 200 side, and also time to spend the update work becomes unnecessary. The reason is because a manual work by a person is entirely unnecessary by the procedures in which the wireless parameters after changed in the wireless LAN access point 100 are requested autonomously after detection of wireless communication release at the wireless LAN terminal 200 side, and the wireless LAN access point 100 notifies of the changed wireless parameters by responding to the request.

The second effect is that it is possible to notify the wireless LAN terminal of requestor of the wireless parameters without disconnecting communication with other wireless LAN terminals even in an environment where the wireless LAN terminal having new wireless parameters and the wireless LAN terminal having old wireless parameters are mixed. As a result, it is not necessary to change wireless parameter setup in all wireless LAN terminals at once after the wireless parameter change by the wireless LAN access point 100, and also it is not necessary to care about the setup condition of the wireless LAN terminal side. The reason is because each of the wireless parameter request and the wireless parameter response is performed by using the respective probe request frame and probe response frame which are ordinary management frame. If the data frame after wireless connection being established were used for requesting and responding the wireless parameters, it would become impossible to communicate in the environment where the wireless LAN terminal having new wireless parameters and the wireless LAN terminal having old wireless parameters are mixed, because it is not possible to communicate without matching the encryption method and the encryption key. As a result, it would be necessary to perform the wireless parameter setup change in all wireless LAN terminals at once.

The third effect is that it is possible to continue communication without performing a setup work in the wireless LAN terminal 200 side even if SSID is changed as the wireless parameter change in the wireless LAN access point 100 side. As a result, it becomes possible to change SSID, which is caused by addition and deletion of the wireless LAN access point and layout change, easily and to reduce the man power for maintenance. The reason is because even the wireless LAN access point which is under concealment status of SSID sends back response to the probe request having broadcast designation SSID when the automatic setup elements are contained.

The fourth effect is that it is possible to continue communication without performing a setup work in the wireless LAN terminal 200 side even if the MAC (Media Access Control) address filtering function is changed to effective as the wireless parameter change in the wireless LAN access point 100 side. As a result, it is possible to realize easily that the security level in the wireless LAN system being used is raised. The reason is because each of the wireless parameter request and the wireless parameter response is performed by using the respective probe request frame and probe response frame which are not influenced by the MAC address filtering function. Also, the reason is because the MAC address of the wireless LAN terminal 200 is registered in the connectable MAC address list when the MAC address of the wireless LAN terminal 200 is not registered at the time of MAC address filtering function is effective. If each of the wireless parameter request and the wireless parameter response were performed by using the data frame after wireless connection being established, it would be impossible to accept the wireless parameter request, when the MAC address filtering function is changed to effective, unless otherwise the MAC address filtering function is set up to invalid or after registering the MAC address of the corresponding wireless LAN terminal manually beforehand.

### (Second exemplary embodiment)

Next, a detailed explanation will be given for a second exemplary embodiment with reference to the drawings.

In the second exemplary embodiment, the wireless parameter change means has a function to change the wireless parameters periodically.

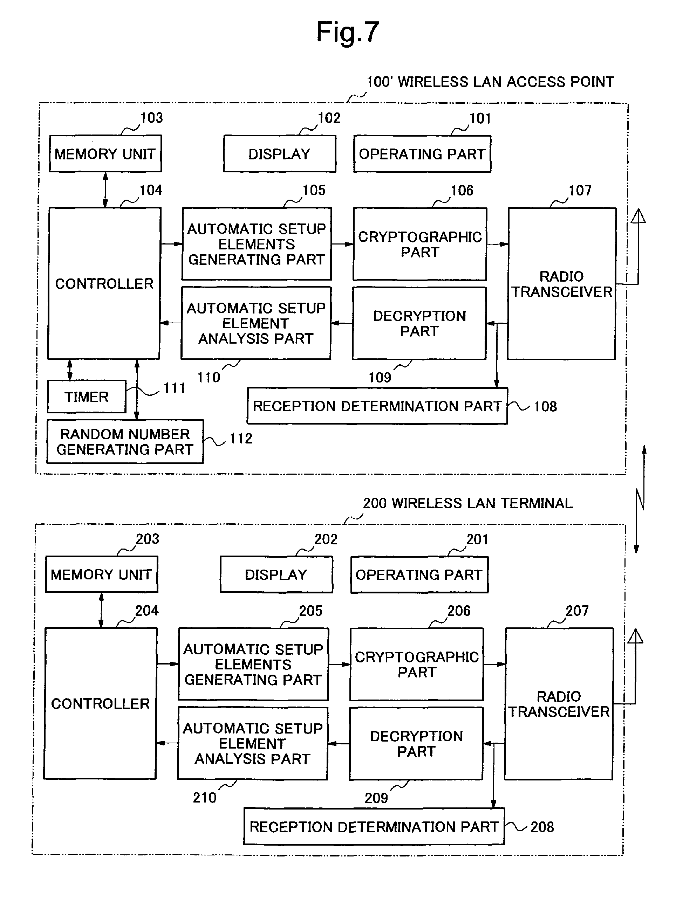

As shown in Fig. 7, the composition of the wireless LAN access point 100' of the second exemplary embodiment is different from the wireless LAN access point 100 in the first exemplary embodiment shown in Fig. 1 in a point that a timer 111 and a random number generating part 112 are added. The timer 111 measures the elapsed time after the last time when the wireless parameter was changed, and after the lapse of preset time, it notifies the controller 104 of the lapse of the preset time. The random number generating part 112 generates random numbers for generating the encryption key.

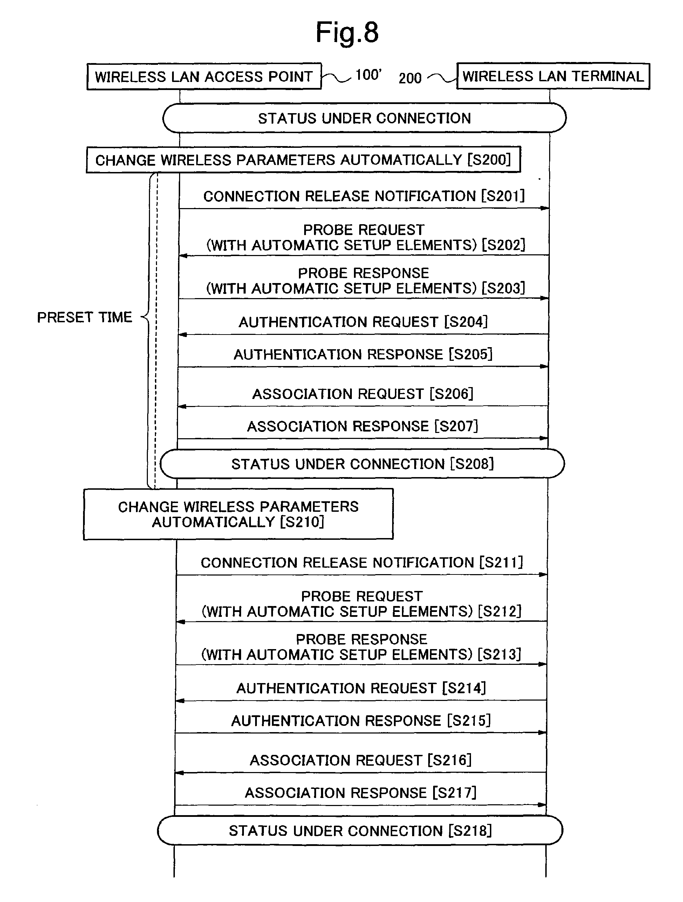

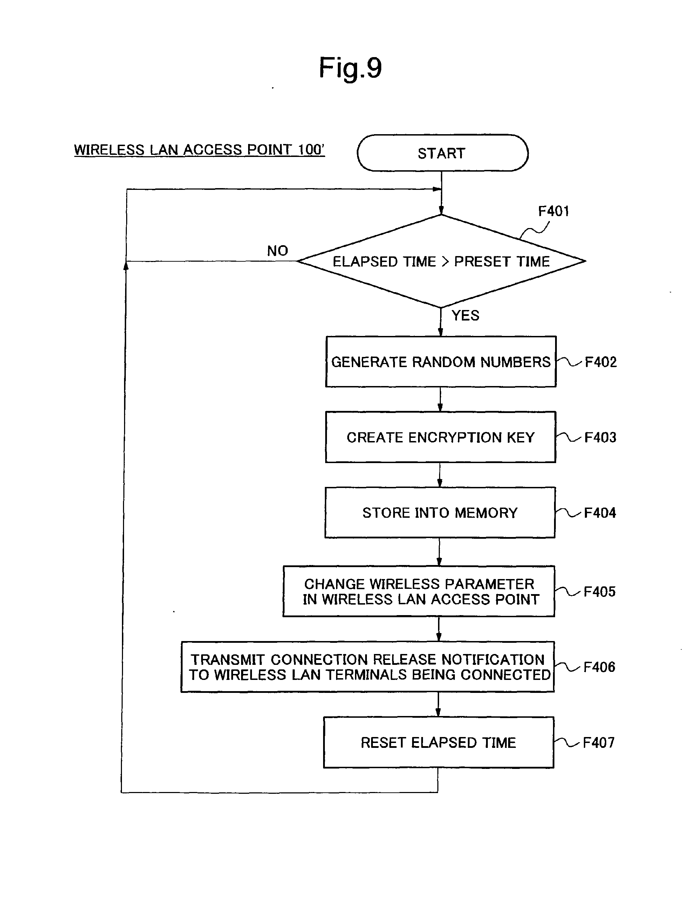

Operation of the second exemplary embodiment will be described in detail with reference to a sequence diagram of Fig. 8 and a flow chart of Fig. 9.

According to the first exemplary embodiment, the wireless LAN connection status is released by the wireless parameter change from the operating part 101 in the wireless LAN access point 100 as a trigger, and after that, the wireless parameter request and the wireless parameter response are performed. In contrast, according to the second exemplary embodiment, the timer 111 measures the elapsed time after the last time when the wireless parameter was changed, and after the lapse of preset time (F401), the lapse of preset time is notified to the controller 104. By this notification, the controller 104 instructs the random number generating part 112 to generate random numbers (F402) and creates a new encryption key (F403). The controller 104 stores the generated encryption key to the memory unit 103 (F404), and changes the wireless parameters of wireless LAN access point 100' (F405) (S200). By the wireless parameter change, connection release notification is transmitted to the wireless LAN terminals 200 which are being connected, and connections of all wireless LAN terminals are disconnected (F406) (S201). After that, by operation described in the first exemplary embodiment, new wireless parameters after changed are notified to the wireless LAN terminal 200, and the connection is reestablished (S208). Further, after the connection release notification is transmitted to the connected wireless LAN terminals 200, the timer 111 resets the elapsed time for the next wireless parameter update (F407). By this reset, after measuring the lapse of preset time again, the wireless parameter change of the next time is also put into effect automatically (S210).

The effect of the second exemplary embodiment is that by updating the encryption key in a wireless LAN access point automatically, it becomes possible to reduce risk of encryption key decipherment which would happen by not changing the encryption key. It also can reduce a network invasion risk because the encryption key can be changed periodically even at a time of outflow of the encryption key by a human factor. Generally, since information for cipher-breaking is accumulated, it tends to become easy for an encryption key to be deciphered if the same encryption key has been used for a long time. Therefore, a cipher-breaking possibility can be brought close to "0" remarkably by changing the encryption key periodically even it has the same cryptographic strength. Even when an encryption key flows out by a human factor, it can reduce a period of the network invasion by changing the encryption key periodically.

Other configuration, operation and effects of the second exemplary embodiment are the same as those of the first exemplary embodiment. Also, a wireless LAN system, a control method and a control program can be composed even in the second exemplary embodiment the same as the first exemplary embodiment can.

### (Third exemplary embodiment)

Next, a detailed explanation will be given for a third exemplary embodiment with reference to the drawings.

In the third exemplary embodiment, the wireless parameter request means has a function to transmit a probe request which is used to select any one from a plurality of wireless LAN access points. More in detail, the wireless parameter request means transmits the probe request including information on a MAC address of a wireless LAN access point in order to select any one from a plurality of wireless LAN access points.

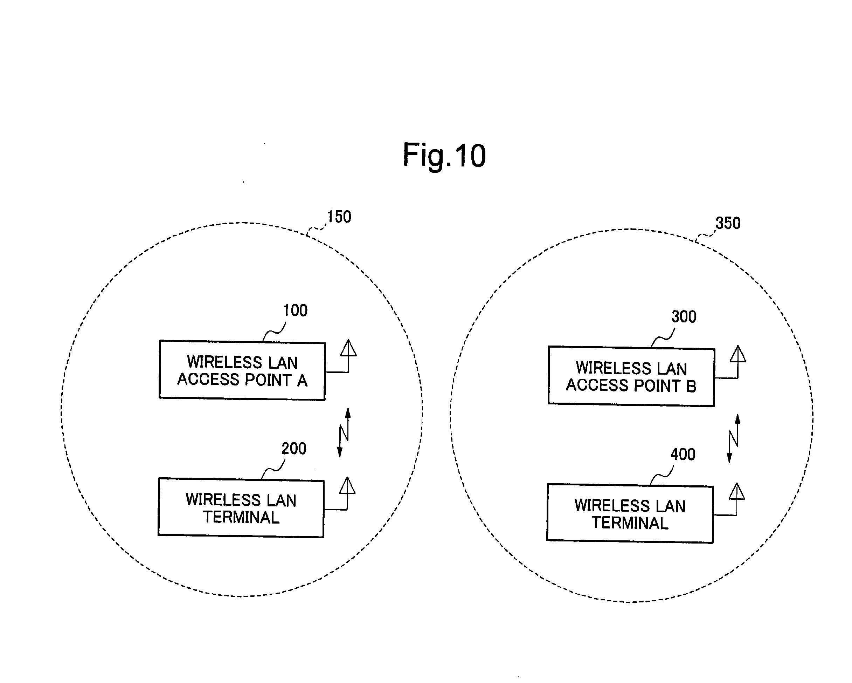

As shown in Fig. 10, in composition of the third exemplary embodiment, there exist a plurality of wireless LAN access points as a wireless LAN access point A 100 (hereinafter, it is abbreviated as "wireless LAN access point A") and a wireless LAN access point B 300 (hereinafter, it is abbreviated as "wireless LAN access point B"). The same configuration is applied to a wireless LAN terminal 200 and a wireless LAN terminal 400. In Fig. 10, each of wireless LAN terminals which exist in the range 150 of the wireless LAN access point A is denoted as the wireless LAN terminal 200, and each of wireless LAN terminals which exist in the range 350 of the wireless LAN access point B is denoted as the wireless LAN terminal 400.

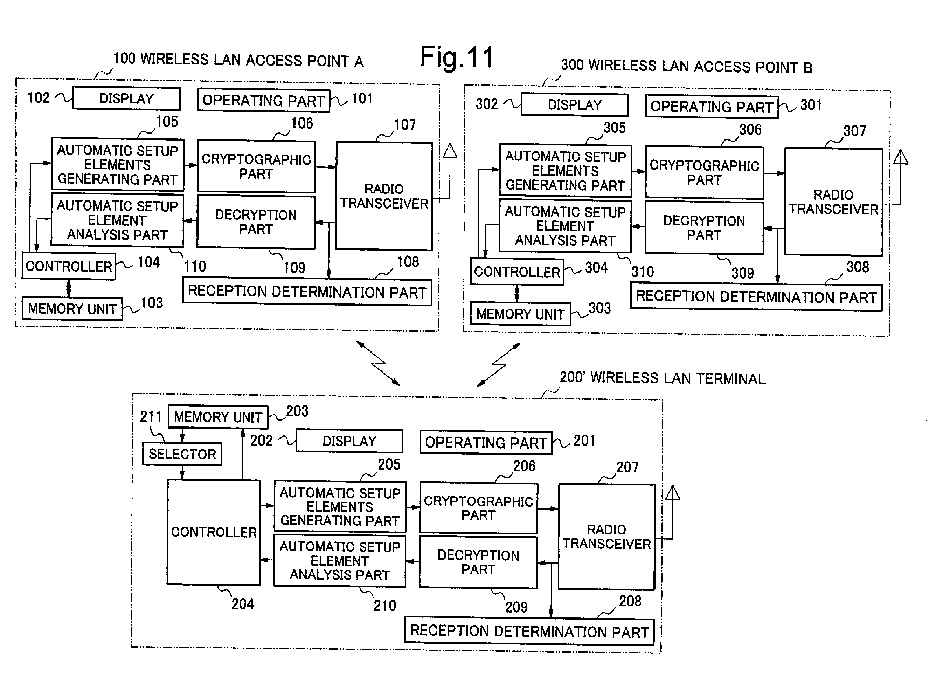

As shown in Fig. 11, the composition of the third exemplary embodiment is different from the composition of the first exemplary embodiment and the second exemplary embodiment in a point that there exist two wireless LAN access points of the wireless LAN access point A and the wireless LAN access point B, and a selector 211 is added to the wireless LAN terminal 200'. The selector 211 selects and acquires a MAC address of the wireless LAN access point A from MAC addresses of the wireless LAN access point to which the wireless parameter notification is requested stored in the memory unit 203. That is, the selector 211 of the wireless LAN terminal 200' acquires the MAC address of the wireless LAN access point A as the wireless LAN access point to which the wireless LAN terminal 200' transmits the wireless parameter notification. The wireless LAN access point A includes the operating part 101, the display 102, the memory unit 103, the controller 104, the automatic setup element generating part 105, the cryptographic part 106, the radio transceiver 107, the reception determination part 108, the decryption part 109 and the automatic setup element analysis part 110. An operating part 301, a display 302, a memory unit 303, a controller 304, an automatic setup element generating part 305, a cryptographic part 306, a radio transceiver 307, a reception determination part 308, a decryption part 309 and an automatic setup element analysis part 310 in the wireless LAN access point B have the same configurations as those in the wireless LAN access point A, respectively.

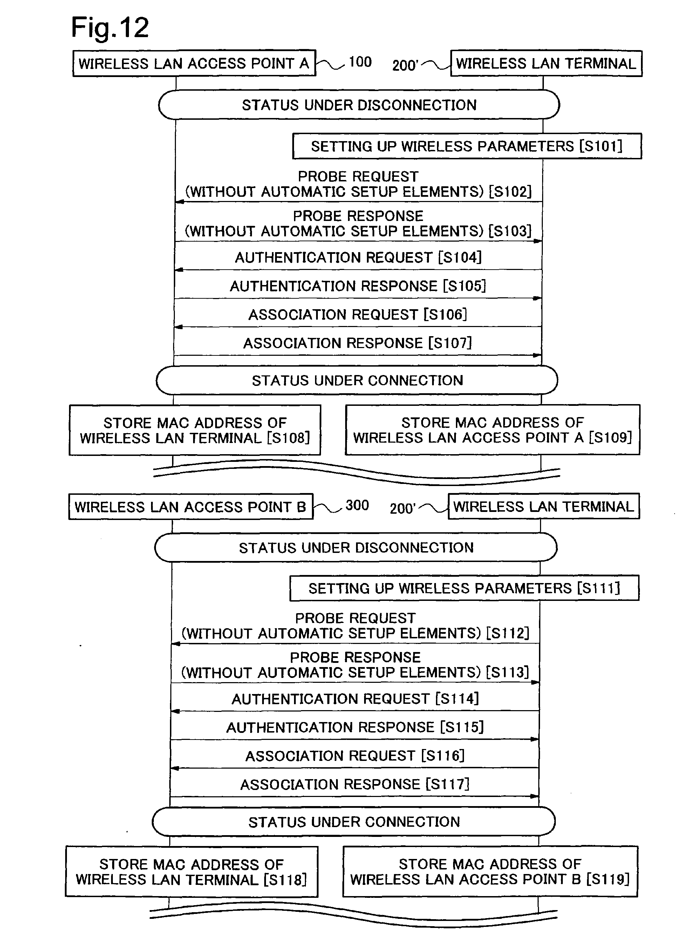

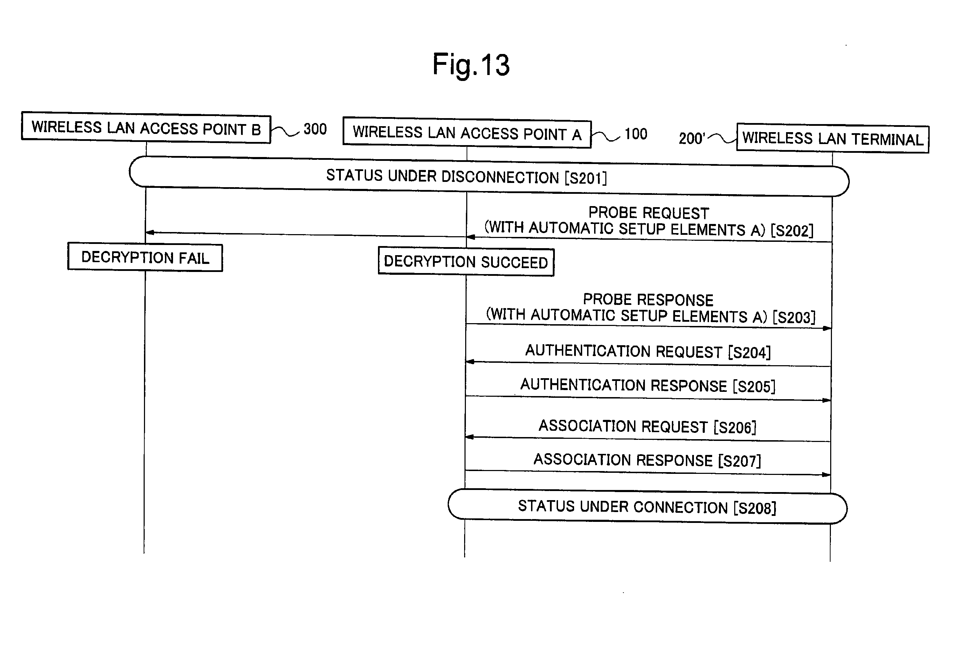

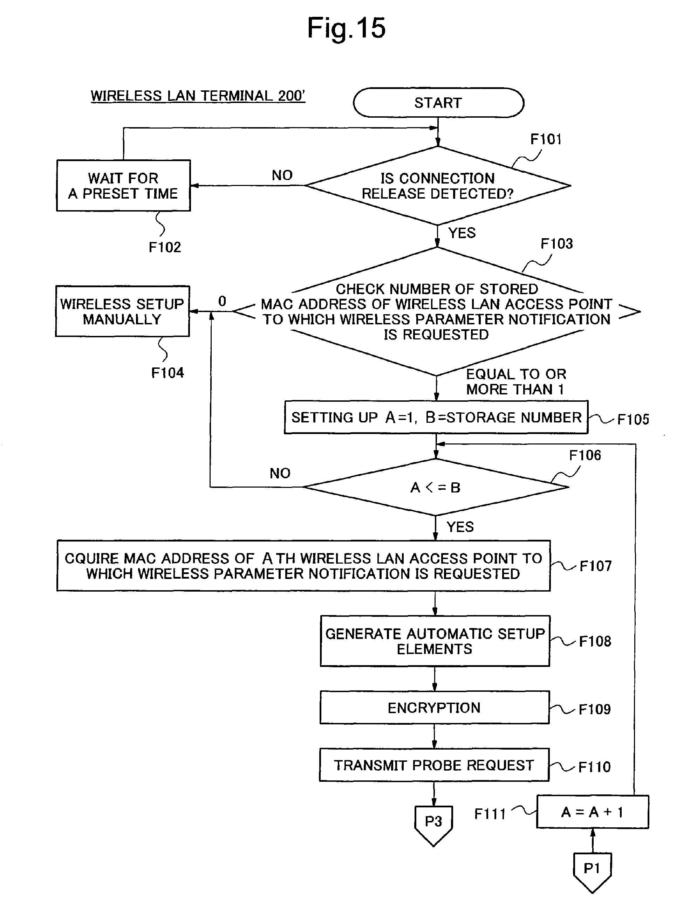

Operation of the third exemplary embodiment will be described in detail with reference to sequence diagrams of Fig. 12 and Fig. 13, and flow charts of Fig. 15, Fig. 16 and Fig. 17.

An initialization operation of the wireless LAN terminal 200' will be described. First, when the wireless LAN terminal 200' exists in the range 150 of the wireless LAN access point A, the wireless LAN terminal 200' sets up the wireless parameters by manual (S101) following the sequences shown in Fig. 12 and stores the MAC address of the wireless LAN access point A to the memory unit 203 after the setup completion (S109). Similarly, when the wireless LAN terminal 200' exists in the range 350 of the wireless LAN access point B, the wireless LAN terminal 200' sets up the wireless parameters by manual (S111) following the sequences shown in Fig. 12 and stores the MAC address of the wireless LAN access point B to the memory unit 203 after the setup completion (S 119).

With the above initialization operation, the memory unit 203 of the wireless LAN terminal 200' stores two MAC addresses, that is, the MAC address of the wireless LAN access point A and the MAC address of the wireless LAN access point B as the MAC addresses of the wireless LAN access points to which the wireless parameter notification is requested.

Similarly to the first exemplary embodiment, the wireless LAN terminal 200' monitors connection status and detects that wireless connection is released as shown in Fig. 15 when the wireless setup in the connected wireless LAN access point has been changed or having moved from the range of the connected wireless LAN access point (F101). When non-connection status, i.e., wireless connection release, is detected, the number of MAC addresses of the wireless LAN access point to which the wireless parameter notification is requested, which are being stored in the memory unit 203, is acquired (F103), and the storage number is set (F105). Each of MAC addresses being stored is acquired successively from "1" to the acquired storage number (F107), and the automatic setup elements generation is performed based on the acquired MAC address information (F108). After that, encryption is performed (F109) and a probe request is transmitted (F110).

The feature of the third exemplary embodiment is that it can accept a plurality of wireless LAN access points. For example, when the MAC address acquired in F107 is a MAC address of the wireless LAN access point A, the automatic setup elements contained in the probe request is encrypted using the MAC address of the wireless LAN access point A. In other words, the MAC address of the wireless LAN access point A is also needed for decryption in the wireless LAN access point side which has received the probe request. First, because the probe request (with the automatic setup elements A) (S202) of Fig. 13 is transmitted by a broadcast, the probe request is received by both of the wireless LAN access points A and B.

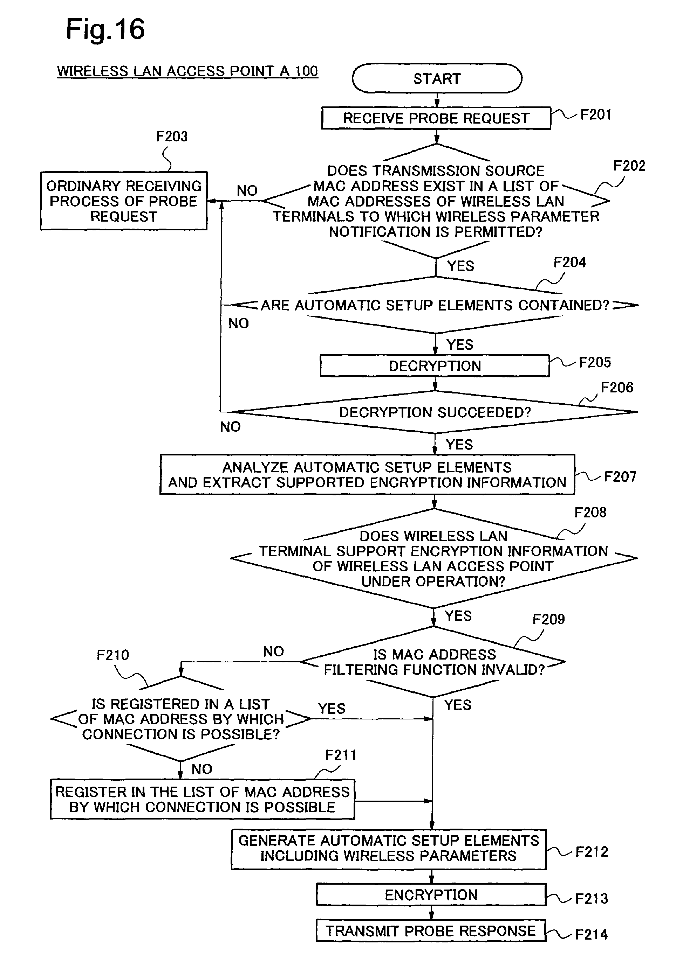

As shown in Fig. 16, as operation after reception of the probe request, it is examined whether a transmission source MAC address exists in a list of MAC addresses of the wireless LAN terminal to which the wireless parameter notification is permitted (F202). In the initialization operation of the wireless LAN terminal, the wireless LAN access point A has stored the MAC address of the transmission source wireless LAN terminal 200' as the MAC address of the wireless LAN terminal to which the wireless parameter notification is permitted in S 108 of Fig. 12, and the wireless LAN access point B has also done the same in S118 of Fig. 12. Therefore, both wireless LAN access points can perform operation up to confirmation of the automatic setup elements containing (F204) and decryption (F205).

Because the automatic setup elements is encrypted by the MAC address of the wireless LAN access point A, decryption in the wireless LAN access point A succeeds, and decryption in the wireless LAN access point B fails. The wireless LAN access point A which has succeeded in decryption performs the same processing as the first exemplary embodiment, and transmits a probe response (with the automatic setup elements A) (S203) shown in Fig. 13 to the wireless LAN terminal 200'. On the other hand, since the wireless LAN access point B which has failed in decryption performs an ordinary receiving process of probe request, a probe response containing the automatic setup elements is not transmitted to the wireless LAN terminal 200'. Thus, only a wireless LAN access point whose MAC address is identical to the MAC address of the wireless LAN access point which was used at the time of encryption in the wireless LAN terminal 200' transmits the probe response containing the automatic setup elements. Therefore, it is possible to select a wireless LAN access point to be connected with priority using a MAC address of the wireless LAN access point which is used for encryption performed in the wireless LAN terminal 200' in the order of connection priority.

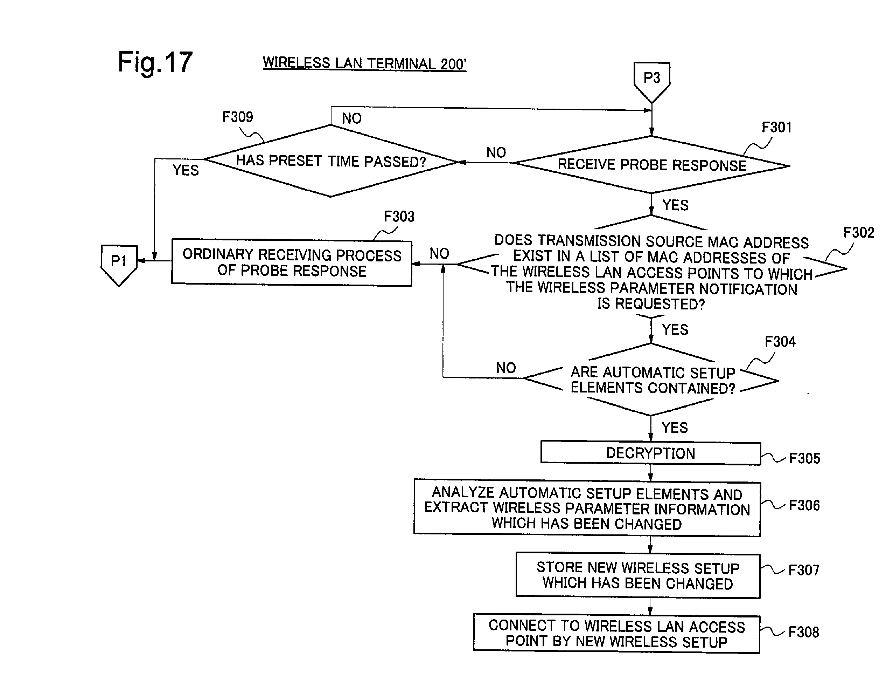

In the flow of Fig. 17, the operation when the wireless LAN terminal 200' receives the probe response (with the automatic setup elements A) (S203) shown in Fig. 13 within a preset time period (F301) is as follows. That is, in a case where the transmission source MAC address exists in a list of MAC addresses of the wireless LAN access point to which the wireless parameter notification is requested (F302) and the automatic setup elements is contained (F304), the wireless LAN terminal 200' performs extraction processing of the wireless parameters from then. The third exemplary embodiment is different from the first exemplary embodiment in the following point under the condition that the transmission source MAC address does not exist in a list of MAC addresses of the wireless LAN access point to which the wireless parameter notification is requested or the automatic setup elements is not contained. That is, it is a point that it repeats the subsequent processes after F111 of Fig. 15 after performing an ordinary receiving process of the probe response (F303). The processing after F111 repeats probe request transmission based on the acquired MAC address as far as the MAC address of the wireless LAN access point to which the wireless parameter notification is requested exists. As a result, it becomes possible to establish connection with any one of the wireless LAN access points to which the wireless parameter notification is requested which exists around the wireless LAN terminal 200'. Further, when the probe response cannot be received within a preset time period, the processing after F111 of Fig. 15 is repeated similarly.

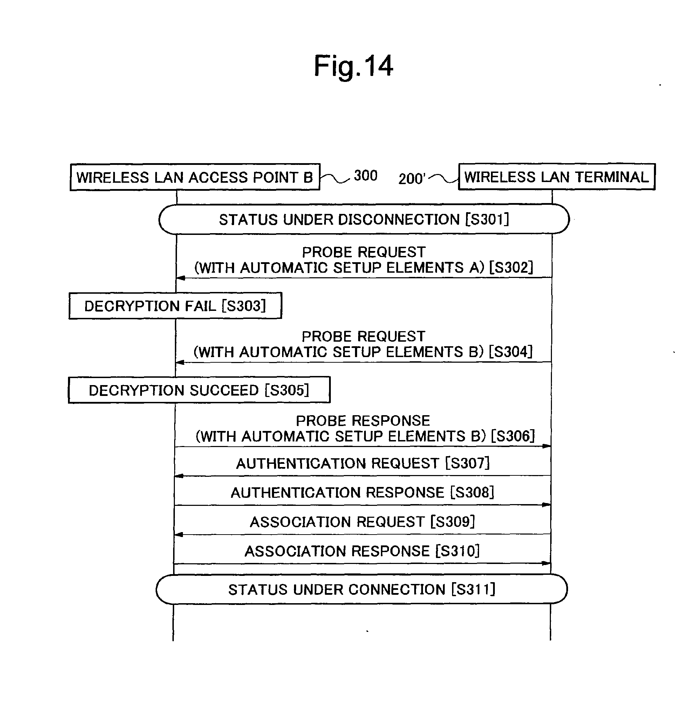

Whereas the above description is an example of the case where both of wireless LAN access points A and B exist in the range of the wireless LAN terminal 200', a sequence diagram when performing similar processing in the environment that only the wireless LAN access point B exists is shown in Fig. 14. Decryption of the first probe request (S302) fails (S303) because it is encrypted using the MAC address of the wireless LAN access point A, and after the lapse of preset time, the second probe request (S304) is transmitted from a wireless LAN terminal. Decryption of the second probe request succeeds because it is encrypted by the MAC address of the wireless LAN access point B, and the wireless parameters in the wireless LAN access point B are transmitted as the probe response (S306). This example indicates that it is possible for the wireless LAN terminal which can accept a plurality of wireless LAN access points to perform connection as far as there exists at least one wireless LAN access point which can be connected.

The effect of the third exemplary embodiment is that it is possible to follow the wireless parameter change in a plurality of wireless LAN access points. As a result, under the environment that a wireless LAN terminal moves between floors or between offices in which a plurality of wireless LAN access points are arranged, it is possible to reduce maintenance man power because the wireless parameters can be changed anytime in the wireless LAN access point independently. At that time, it is not necessary to care about setup condition of the wireless LAN terminal, and also it is not necessary to care about cooperation with other wireless LAN access points. Because, by only performing an initialization operation in a wireless LAN terminal, the wireless LAN terminal can autonomously perform wireless parameter exchange with surrounding wireless LAN access points.

Other configuration, operation and effects in the third exemplary embodiment are the same as those of the first and second exemplary embodiments. Also, a wireless LAN system, a control method and a control program can be composed even in the third exemplary embodiment the same as those of the first exemplary embodiment can.

### (Fourth exemplary embodiment)

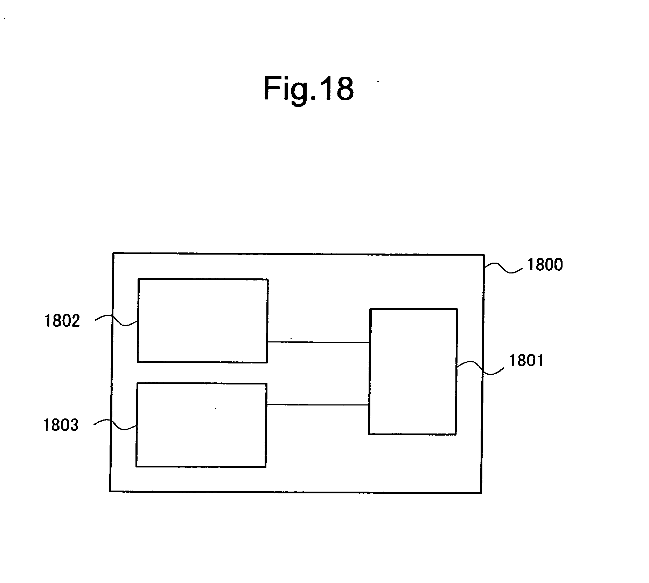

Next, the configuration of a fourth exemplary embodiment of the present invention will be described in detail with reference to Fig. 18.

A wireless LAN terminal 1800 of the fourth exemplary embodiment includes a communication means 1801 which performs wireless communication with a wireless LAN access point and a wireless parameter request means 1802 which transmits a probe request which requests wireless parameters used for the wireless communication to the wireless LAN access point via the communication means.

The wireless LAN terminal 1800 further includes a wireless parameter setup means 1803 which receives a probe response from the wireless LAN access point as a response to the probe request of the wireless parameter request means via the communication means and sets up the wireless parameters included in the probe response.

As a result, after detection of wireless communication disconnection, the wireless LAN terminal 1800 requests the wireless parameters after changed to the wireless LAN access point autonomously, and the wireless LAN access point notifies of the changed wireless parameters according to the request. Accordingly, it is possible to continue communication without performing a setup work in the wireless LAN terminal 1800 side after the wireless parameter change in the wireless LAN access point side.

### (Fifth exemplary embodiment)

A wireless LAN access point according to a fifth exemplary embodiment includes a communication means which performs wireless communication with a wireless LAN terminal, a wireless parameter change means which changes wireless parameters used for the wireless communication and a wireless parameter response means which transmits a probe response including the wireless parameters to the wireless LAN terminal via the communication means when a probe request which requests the wireless parameters is received from the wireless LAN terminal via the communication means.

### (Sixth exemplary embodiment)

A wireless LAN system according to a sixth exemplary embodiment includes a wireless LAN terminal and a wireless LAN access point.

The wireless LAN terminal includes a communication means which performs wireless communication with the wireless LAN access point, a wireless parameter request means which transmits a probe request for requesting wireless parameters used for the wireless communication to the wireless LAN access point via the communication means, and a wireless parameter setup means which receives a probe response from the wireless LAN access point as a response to the probe request of the wireless parameter request means via the communication means and sets up the wireless parameters included in the probe response.

The wireless LAN access point includes a communication means which performs the wireless communication with the wireless LAN terminal, a wireless parameter change means which changes the wireless parameters used for the wireless communication, and a wireless parameter response means which transmits a probe response including the wireless parameters to the wireless LAN terminal via the communication means when a probe request which requests the wireless parameters is received from the wireless LAN terminal via the communication means.

### (Seventh exemplary embodiment)

A wireless LAN system according to a seventh exemplary embodiment includes a wireless LAN terminal and a wireless LAN access point.

The wireless LAN terminal includes a communication means which performs wireless communication with the wireless LAN access point, a wireless parameter request means which transmits a probe request for requesting wireless parameters used for the wireless communication to the wireless LAN access point via the communication means, and a wireless parameter setup means which receives a probe response from the wireless LAN access point as a response to the probe request of the wireless parameter request means via the communication means and sets up the wireless parameters included in the probe response.

The wireless LAN access point includes a communication means which performs the wireless communication with the wireless LAN terminal, a wireless parameter change means which changes the wireless parameters used for the wireless communication, and a wireless parameter response means which transmits a probe response including the wireless parameters to the wireless LAN terminal via the communication means when a probe request which requests the wireless parameters is received from the wireless LAN terminal via the communication means, wherein the wireless parameter change means has a function to change the wireless parameters periodically.

### (Eighth exemplary embodiment)

A wireless LAN system according to an eighth exemplary embodiment includes a wireless LAN terminal and a wireless LAN access point.

The wireless LAN terminal includes a communication means which performs wireless communication with the wireless LAN access point, a wireless parameter request means which transmits a probe request for requesting wireless parameters used for the wireless communication to the wireless LAN access point via the communication means, and a wireless parameter setup means which receives a probe response from the wireless LAN access point as a response to the probe request of the wireless parameter request means via the communication means and sets up the wireless parameters included in the probe response, wherein the wireless parameter request means has a function to transmit the probe request which is used to select any one from a plurality of the wireless LAN access points.

The wireless LAN access point includes a communication means which performs the wireless communication with the wireless LAN terminal, a wireless parameter change means which changes the wireless parameters used for the wireless communication, a wireless parameter response means which transmits a probe response including the wireless parameters to the wireless LAN terminal via the communication means when the probe request which requests the wireless parameters is received from the wireless LAN terminal via the communication means.

### (Ninth exemplary embodiment)

A wireless LAN system according to a ninth exemplary embodiment includes a wireless LAN terminal and a wireless LAN access point.

The wireless LAN terminal includes a communication means which performs wireless communication with the wireless LAN access point, a wireless parameter request means which transmits a probe request for requesting wireless parameters used for the wireless communication to the wireless LAN access point via the communication means, and a wireless parameter setup means which receives a probe response from the wireless LAN access point as a response to the probe request of the wireless parameter request means via the communication means and sets up the wireless parameters included in the probe response, wherein the wireless parameter request means has a function to transmit the probe request which is used to select any one from a plurality of the wireless LAN access points.

The wireless LAN access point includes a communication means which performs the wireless communication with the wireless LAN terminal, a wireless parameter change means which changes the wireless parameters used for the wireless communication, and a wireless parameter response means which transmits a probe response including the wireless parameters to the wireless LAN terminal via the communication means when the probe request which requests the wireless parameters is received from the wireless LAN terminal via the communication means, wherein the wireless parameter change means has a function to change the wireless parameters periodically.

### (Tenth exemplary embodiment)

A wireless LAN system according to a tenth exemplary embodiment includes a wireless LAN terminal and a wireless LAN access point.

The wireless LAN terminal includes a communication means which performs wireless communication with the wireless LAN access point, a wireless parameter request means which transmits a probe request for requesting wireless parameters used for the wireless communication to the wireless LAN access point via the communication means, and a wireless parameter setup means which receives a probe response from the wireless LAN access point as a response to the probe request of the wireless parameter request means via the communication means and sets up the wireless parameters included in the probe response, wherein the wireless parameter request means has a function to transmit the probe request which is used to select any one from a plurality of the wireless LAN access points, and the wireless parameter request means also has a function to transmit the probe request which includes MAC address information on the wireless LAN access point in order to select any one from a plurality of the wireless LAN access points.

The wireless LAN access point includes a communication means which performs the wireless communication with the wireless LAN terminal, a wireless parameter change means which changes the wireless parameters used for the wireless communication, and a wireless parameter response means which transmits a probe response including the wireless parameters to the wireless LAN terminal via the communication means when a probe request which requests the wireless parameters is received from the wireless LAN terminal via the communication means.

### (Eleventh exemplary embodiment)

A wireless LAN system according to an eleventh exemplary embodiment includes a wireless LAN terminal and a wireless LAN access point.

The wireless LAN terminal includes a communication means which performs wireless communication with the wireless LAN access point, a wireless parameter request means which transmits a probe request for requesting wireless parameters used for the wireless communication to the wireless LAN access point via the communication means, and a wireless parameter setup means which receives a probe response from the wireless LAN access point as a response to the probe request of the wireless parameter request means via the communication means and sets up the wireless parameters included in the probe response, wherein the wireless parameter request means has a function to transmit the probe request which is used to select any one from a plurality of the wireless LAN access points, and the wireless parameter request means also has a function to transmit the probe request which includes MAC address information on the wireless LAN access point in order to select any one from a plurality of the wireless LAN access points.

The wireless LAN access point includes a communication means which performs the wireless communication with the wireless LAN terminal, a wireless parameter change means which changes the wireless parameters used for the wireless communication, and a wireless parameter response means which transmits a probe response including the wireless parameters to the wireless LAN terminal via the communication means when a probe request which requests the wireless parameters is received from the wireless LAN terminal via the communication means, wherein the wireless parameter change means has a function to change the wireless parameters periodically.

### (Twelfth exemplary embodiment)

In a method for controlling a wireless LAN terminal equipped with a communication means which performs wireless communication with a wireless LAN access point, the control method of the wireless LAN terminal according to a twelfth exemplary embodiment includes transmitting a probe request which requests wireless parameters used for the wireless communication to the wireless LAN access point via the communication means, receiving a probe response from the wireless LAN access point as a response to the probe request via the communication means and setting up the wireless parameters included in the probe response.

### (Thirteenth exemplary embodiment)

In a method for controlling a wireless LAN access point equipped with a communication means which performs wireless communication with a wireless LAN terminal, the control method of the wireless LAN access point according to a thirteenth exemplary embodiment includes changing wireless parameters used for the wireless communication, and transmitting a probe response including the wireless parameters to the wireless LAN terminal via the communication means when receiving a probe request which requests the wireless parameters from the wireless LAN terminal via the communication means.

### (Fourteenth exemplary embodiment)

In a control program used in a wireless LAN terminal equipped with a communication means which performs wireless communication with a wireless LAN access point, the control program of the wireless LAN terminal according to a fourteenth exemplary embodiment causes a computer to execute a processing of transmitting a probe request which requests wireless parameters used for the wireless communication to the wireless LAN access point via the communication means, a processing of receiving a probe response from the wireless LAN access point as a response to the probe request via the communication means and a processing of setting up the wireless parameter included in the probe response.

### (Fifteenth exemplary embodiment)

In a control program used in a wireless LAN access point equipped with a communication means which performs wireless communication with a wireless LAN terminal, the control program of the wireless LAN access point according to a fifteenth exemplary embodiment causes a computer to execute a processing of changing wireless parameters used for the wireless communication, and a processing of transmitting a probe response including the wireless parameter to the wireless LAN terminal via the communication means when receiving a probe request which requests the wireless parameters from the wireless LAN terminal via the communication means.

The related art described in the background art causes problems as below.

Technology in the patent document 1 includes the following two problems.

The first problem is that the encryption key cannot be changed to an arbitrary encryption key. The reason is because the key information is stored in the IC card in advance, and it is necessary to install in the wireless LAN access point and the wireless LAN terminal respectively. That is, because any encryption keys other than the key information stored in the IC card cannot be used.

The second problem is that the wireless parameters other than the encryption key, such as SSID (Service Set Identifier) or the like, for example, cannot be changed. The reason is because the wireless LAN terminal side can only follow the wireless parameter change to the predetermined encryption key information. That is, it is because the wireless parameters other than the encryption key are not stored in the IC card. Further, the SSID is a network identifier which is used in the wireless LAN system, and the identical SSID should be set up in both of the wireless LAN terminal and the wireless LAN access point for communicating with each other.

On the other hand, in the existing wireless LAN system, there exists WPS (WiFi Protected Setup) or the like as a method for connecting a wireless LAN terminal to an operating wireless LAN access point easily by user operation. However, the wireless parameter change in the wireless LAN access point after connecting with the wireless LAN terminal is not considered, therefore, connection of the wireless LAN terminal is released from the wireless LAN access point when the wireless parameter change is performed in the wireless LAN access point. It is necessary for the wireless LAN terminal from which the connection has been released to perform connection setup to the wireless LAN access point from the beginning once again.

When a plurality of wireless LAN terminals are connected with one wireless LAN access point, the connection setup for all wireless LAN terminals should be performed once again, and it causes a problem that it needs great amount of time and effort and also communication could fail due to any mistakes in the connection setup or update operation.

Technology in the patent document 2 is that it judges transmission output, a channel frequency and capability of outdoor use or the like from a database based on information such as the regulation regarding radio utilization in a country where the wireless LAN access point is used. Accordingly, it is not a technology which is related to notify a wireless LAN terminal of required wireless parameters for the connection with a wireless LAN access point such as an encryption key and SSID which are different for each of apparatuses.

As it has been described above, an object of the present invention is to make it possible in a wireless LAN system that when the wireless parameters are changed in the wireless LAN access point side, a wireless LAN terminal side detects this situation, acquires new wireless parameters autonomously and connects with a wireless LAN access point again. In other words, the present invention has a feature in the following points:
* a wireless LAN terminal side can automatically follow to the wireless LAN parameter change in a wireless LAN access point;
* exchanging the wireless parameters is performed using a probe request and a probe response;
* it responds to a probe request of SSID broadcast even if the wireless LAN access point is performing an SSID concealment operation;
* a wireless LAN terminal can follow the wireless parameter change even after SSID change and MAC address filtering function change, not only at the time of encryption setup change in a wireless LAN access point;
* the wireless parameters can be exchanged without disconnecting communication with other wireless LAN terminals even in an environment in which the wireless LAN terminal having new wireless parameter setup and the wireless LAN terminal having old wireless parameter setup are mixed;
* the wireless parameters of a wireless LAN access point can be automatically updated by a timer; and
* a wireless LAN terminal can follow the wireless parameter change automatically even in an environment in which a plurality of wireless LAN access points exist.

The previous description of embodiments is provided to enable a person skilled in the art to make and use the present invention. Moreover, various modifications to these exemplary embodiments will be readily apparent to those skilled in the art, and the generic principles and specific examples defined herein may be applied to other embodiments without the use of inventive faculty. Therefore, the present invention is not intended to be limited to the exemplary embodiments described herein but is to be accorded the widest scope as defmed by the limitations of the claims and equivalents.

Further, it is noted that the inventor's intent is to retain all equivalents of the claimed invention even if the claims are amended during prosecution.

The whole or part of the exemplary embodiments disclosed above can be described as, but not limited to, the following supplementary notes.

### (Supplementary note 1)

A wireless LAN terminal comprising:
a communication means which performs wireless communication with a wireless LAN access point;
a wireless parameter request means which transmits a probe request for requesting wireless parameters used for the wireless communication to the wireless LAN access point via the communication means; and
a wireless parameter setup means which receives a probe response from the wireless LAN access point as a response to the probe request of the wireless parameter request means via the communication means and sets up the wireless parameters included in the probe response.

### (Supplementary note 2)

The wireless LAN terminal according to supplementary note 1, wherein the wireless parameter request means has a function to transmit the probe request which is used to select any one from a plurality of the wireless LAN access points.

### (Supplementary note 3)

The wireless LAN terminal according to supplementary note 2, wherein the wireless parameter request means transmits the probe request including information on a MAC address of the wireless LAN access point in order to select any one from a plurality of the wireless LAN access points.

### (Supplementary note 4)

A wireless LAN access point comprising:
a communication means which performs wireless communication with a wireless LAN terminal;
a wireless parameter change means which changes the wireless parameters used for the wireless communication; and
a wireless parameter response means which transmits a probe response including the wireless parameters to the wireless LAN terminal via the communication means when a probe request which requests the wireless parameters is received from the wireless LAN terminal via the communication means.

### (Supplementary note 5)

The wireless LAN access point according to supplementary note 4, wherein the wireless parameter change means has a function to change the wireless parameters periodically.

### (Supplementary note 6)

The wireless LAN system comprising a wireless LAN terminal according to any one of supplementary notes 1 to 3, and a wireless LAN access point according to supplementary note 3 or 4.

### (Supplementary note 7)

A method for controlling a wireless LAN terminal equipped with a communication means for performing wireless communication with a wireless LAN access point, the method comprising the steps of:
transmitting a probe request which requests wireless parameters used for the wireless communication to the wireless LAN access point via the communication means;
receiving a probe response from the wireless LAN access point as a response to the probe request via the communication means; and
setting up the wireless parameters included in the probe response.

### (Supplementary note 8)

The control method for controlling a wireless LAN terminal according to supplementary note 7, wherein the probe request is used to select any one from a plurality of the wireless LAN access points.

### (Supplementary note 9)

The control method for controlling a wireless LAN terminal according to supplementary note 8, wherein the probe request includes information on a MAC address of the wireless LAN access point in order to select any one from a plurality of the wireless LAN access points.

### (Supplementary note 10)

A method for controlling a wireless LAN access point equipped with a communication means for performing wireless communication with a wireless LAN terminal, the method comprising the steps of:
changing wireless parameters used for the wireless communication; and
transmitting a probe response including the wireless parameters to the wireless LAN terminal via the communication means when receiving a probe request which requests the wireless parameters from the wireless LAN terminal via the communication means.

### (Supplementary note 11)

The control method for controlling a wireless LAN access point according to supplementary note 10, the method further comprising the step of changing the wireless parameters periodically when the wireless parameters used for the wireless communication are changed.

### (Supplementary note 12)

A computer-readable memory containing a control program used in a wireless LAN terminal equipped with a computer and a communication means which performs wireless communication with a wireless LAN access point, the program causes a computer to execute steps of:
transmitting a probe request which requests wireless parameters used for the wireless communication to the wireless LAN access point via the communication means;
a processing of receiving a probe response from the wireless LAN access point as a response to the probe request via the communication means; and
a processing of setting up the wireless parameters included in the probe response.

### (Supplementary note 13)

The computer-readable memory according to supplementary note 12, wherein the probe request is used to select any one from a plurality of the wireless LAN access points.

### (Supplementary note 14)

The computer-readable memory according to supplementary note 13, wherein the probe request includes information on a MAC address of the wireless LAN access point in order to select any one from a plurality of the wireless LAN access points.

### (Supplementary note 15)

A computer-readable memory containing a control program used in a wireless LAN access point equipped with a computer and a communication means which performs wireless communication with a wireless LAN terminal, the program causes a computer to execute steps of:
changing wireless parameters used for the wireless communication; and
transmitting a probe response including the wireless parameters to the wireless LAN terminal via the communication means when receiving a probe request which requests the wireless parameters from the wireless LAN terminal via the communication means.

### (Supplementary note 16)

The computer-readable memory according to supplementary note 15, wherein when the wireless parameters used for the wireless communication are changed, the program causes a computer to execute a processing of changing the wireless parameters periodically.

## Claims

1. A wireless LAN terminal comprising:
a communication means which performs wireless communication with a wireless LAN access point;
a wireless parameter request means which transmits a probe request for requesting wireless parameters used for the wireless communication to the wireless LAN access point via the communication means; and
a wireless parameter setup means which receives a probe response from the wireless LAN access point as a response to the probe request of the wireless parameter request means via the communication means and sets up the wireless parameters included in the probe response.

2. The wireless LAN terminal according to claim 1, wherein the wireless parameter request means has a function to transmit the probe request which is used to select any one from a plurality of the wireless LAN access points.

3. The wireless LAN terminal according to claim 2, wherein the wireless parameter request means transmits the probe request including information on a MAC address of the wireless LAN access point in order to select any one from a plurality of the wireless LAN access points.

4. A wireless LAN access point comprising:
a communication means which performs wireless communication with a wireless LAN terminal;
a wireless parameter change means which changes the wireless parameters used for the wireless communication; and
a wireless parameter response means which transmits a probe response including the wireless parameters to the wireless LAN terminal via the communication means when a probe request which requests the wireless parameters is received from the wireless LAN terminal via the communication means.

5. The wireless LAN access point according to claim 4, wherein the wireless parameter change means has a function to change the wireless parameters periodically.

6. The wireless LAN system comprising a wireless LAN terminal according to any one of claims 1 to 3, and a wireless LAN access point according to claim 3 or 4.

7. A method for controlling a wireless LAN terminal equipped with a communication means for performing wireless communication with a wireless LAN access point, the method comprising the steps of:
transmitting a probe request which requests wireless parameters used for the wireless communication to the wireless LAN access point via the communication means;
receiving a probe response from the wireless LAN access point as a response to the probe request via the communication means; and
setting up the wireless parameters included in the probe response.

8. The control method for controlling a wireless LAN terminal according to claim 7, wherein the probe request is used to select any one from a plurality of the wireless LAN access points.

9. The control method for controlling a wireless LAN terminal according to claim 8, wherein the probe request includes information on a MAC address of the wireless LAN access point in order to select any one from a plurality of the wireless LAN access points.

10. A method for controlling a wireless LAN access point equipped with a communication means for performing wireless communication with a wireless LAN terminal, the method comprising the steps of:
changing wireless parameters used for the wireless communication; and
transmitting a probe response including the wireless parameters to the wireless LAN terminal via the communication means when receiving a probe request which requests the wireless parameters from the wireless LAN terminal via the communication means.

11. The control method for controlling a wireless LAN access point according to claim 10, the method further comprising the step of changing the wireless parameters periodically when the wireless parameters used for the wireless communication are changed.

12. A computer-readable memory containing a control program used in a wireless LAN terminal equipped with a computer and a communication means which performs wireless communication with a wireless LAN access point, the program causes a computer to execute steps of:
transmitting a probe request which requests wireless parameters used for the wireless communication to the wireless LAN access point via the communication means;
a processing of receiving a probe response from the wireless LAN access point as a response to the probe request via the communication means; and
a processing of setting up the wireless parameters included in the probe response.

13. The computer-readable memory according to claim 12, wherein the probe request is used to select any one from a plurality of the wireless LAN access points.

14. The computer-readable memory according to claim 13, wherein the probe request includes information on a MAC address of the wireless LAN access point in order to select any one from a plurality of the wireless LAN access points.

15. A computer-readable memory containing a control program used in a wireless LAN access point equipped with a computer and a communication means which performs wireless communication with a wireless LAN terminal, the program causes a computer to execute steps of:
changing wireless parameters used for the wireless communication; and
transmitting a probe response including the wireless parameters to the wireless LAN terminal via the communication means when receiving a probe request which requests the wireless parameters from the wireless LAN terminal via the communication means.

16. The computer-readable memory according to claim 15, wherein when the wireless parameters used for the wireless communication are changed, the program causes a computer to execute a processing of changing the wireless parameters periodically.
